# EUROPEAN PATENT SPECIFICATION

(11) **EP 3 980 726 B1**
(45) Date of publication and mention of the grant of the patent: **05.07.2023**
(21) Application number: 20727350.9
(22) Date of filing: 05.05.2020
(51) Int. Cl.: G01D 5/20, G01B 7/00, G01P 3/488

(54) **A POSITION SENSOR AND A METHOD FOR MANUFACTURING THE SAME**
POSITIONSSENSOR UND VERFAHREN ZUR HERSTELLUNG DAVON
CAPTEUR DE POSITION ET SON PROCÉDÉ DE FABRICATION

(30) Priority: 04.06.2019 FI 20195476
(43) Date of publication of application: 13.04.2022
(73) Proprietor: Lappeenrannan-Lahden teknillinen yliopisto LUT, 53851 Lappeenranta (FI)
(72) Inventor: JASTRZEBSKI, Rafal, 53851 LAPPEENRANTA (FI); TOLSA, Kimmo, 53851 LAPPENRANTA (FI)
(74) Representative: Väänänen, Janne Kalervo
(86) International application number: PCT/FI2020/050300
(87) International publication number: WO 2020/245496

(56) References cited:
- CN-U- 204 388 777
- US-A1- 2017 152 894
- US-B2- 7 071 685

## Description

### Technical field

The disclosure relates to a position sensor. Furthermore, the disclosure relates to a position sensor system comprising two or more position sensors. Furthermore, the disclosure relates to a linear electric machine comprising one or more position sensors. Furthermore, the disclosure relates a method for manufacturing a position sensor.

### Background

This section illustrates useful background information without admission of any technique described herein representative of the state of the art.

Many position- and/or motion-controlled systems require feedback and therefore position sensors are needed for measuring a position, proximity, motion, displacement, and/or a distance. Furthermore, there can be a requirement, or it is at least advantageous, that the above-mentioned measuring is carried out in a contactless way. For example, magnetically levitated systems typically require as many position sensors as there are controlled degrees of freedom. Inductive and/or eddy current position sensors are suitable for non-contact measurements of position, proximity, motion, displacement and/or distance. These position sensors are suitable for measurements in industrial environments and may be used for example for sensing motion in linear driven machines and/or linear driven energy conversion. Examples of linear driven machines include trains, trams, metros, magnetically levitated vehicles, hyperloops, oil sucking machines, linear servo machines, carts, conveyor belts, warehouse transportations, linear-driven crane-bridges, linear-driven bridges, elevators, and linear accelerators.

A typical inductive and/or eddy current position sensor comprises a ferromagnetic core for conducting a magnetic flux and at least one coil surrounding a part of the ferromagnetic core. Furthermore, the position sensor comprises mechanical support structures for mechanically supporting the position sensor with respect to an object whose position, motion, proximity, displacement, and/or distance with respect to the position sensor is to be measured. The object can be for example a mover of a linear electric machine or a rotor of a rotating electric machine. The mechanical construction of a position sensor of the kind mentioned above can be however quite complex because, on one hand, the ferromagnetic core needs to be mechanically supported and, on the other hand, there must be enough free space for the coil in the surroundings of the ferromagnetic core.

US 2017/152894 A1 discloses a resolver bearing with a rotor providing an angle position-dependant variable reluctance in a magnetic circuit.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments.

In this document, the word "geometric" when used as a prefix means a geometric concept that is not necessarily a part of any physical object. The geometric concept can be for example a geometric point, a straight or curved geometric line, a geometric plane, a non-planar geometric surface, a geometric space, or any other geometric entity that is zero, one, two, or three dimensional.

In this document, the word "position sensor" means a sensor for measuring a position, proximity, motion, displacement, and/or a distance.

In accordance with the invention, there is provided a new position sensor that comprises:
- a ferromagnetic core for conducting a magnetic flux,
- at least one coil each surrounding a part of the ferromagnetic core, and
- circuit boards mechanically supporting the ferromagnetic core.

The coil of the position sensor according to the invention comprises electric conductors of the circuit boards and electric connectors electrically connecting the electric conductors of one of the circuit boards to the electric conductors of another one of the circuit boards. The above-mentioned part of the ferromagnetic core and the electric connectors are between the circuit boards and the part of the ferromagnetic core is between the electric connectors. Thus, the coil constituted by the electric conductors of the circuit boards and by the electric connectors is around the part of the ferromagnetic core.

There is no need for a separate coil winding because the coil is implemented when the circuit boards are connected to each other with the aid of the electric connectors so that the above-mentioned part of the ferromagnetic core gets between the circuit boards and between the electric connectors.

In accordance with the invention, there is provided also a new position sensor system that comprises two or more position sensors according to the invention. The position sensor system comprises a circuit board belonging to at least two of the position sensors and comprising electric conductors constituting parts of the coils of the at least two position sensors. Thus, the same circuit board can be used for implementing the coils of two or more position sensors.

In accordance with the invention, there is provided also a new linear electric machine that comprises:
- a first element having windings,
- a second element linearly movable with respect to the first element and having a toothed ferromagnetic rail for generating reluctance forces in response to supplying electric currents to the windings, and
- at least one position sensor according to the invention for detecting a position of the toothed ferromagnetic rail with respect to the position sensor.

In accordance with the invention, there is provided also a new method for manufacturing a position sensor. The method comprises:
- implementing a ferromagnetic core for conducting a magnetic flux, and
- implementing at least one coil each surrounding a part of the ferromagnetic core.

In the method according to the invention, the coil is implemented with electric conductors of circuit boards and with electric connectors electrically connecting the electric conductors of one of the circuit boards to the electric conductors of another one of the circuit boards. The above-mentioned part of the ferromagnetic core and the electric connectors are placed between the circuit boards and the part of the ferromagnetic core is placed between the electric connectors. Thus, the coil constituted by the electric conductors of the circuit boards and by the electric connectors gets around the part of the ferromagnetic core.

Various exemplifying and non-limiting embodiments are described in accompanied dependent claims.

Exemplifying and non-limiting embodiments both as to constructions and to methods of operation, together with additional objects and advantages thereof, will be best understood from the following description of specific exemplifying and non-limiting embodiments when read in conjunction with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments and their advantages are explained in greater detail below in the sense of examples and with reference to the accompanying drawings, in which:
figures 1a and 1b illustrate a position sensor according to an exemplifying and non-limiting embodiment,
figures 2a and 2b illustrate a position sensor system according to an exemplifying and non-limiting embodiment,
figure 3 illustrates a linear electric machine according to an exemplifying and non-limiting embodiment, and
figure 4 shows a flowchart of a method according to an exemplifying and non-limiting embodiment for manufacturing a position sensor.

### Description of the exemplifying and non-limiting embodiments

The specific examples provided in the description below should not be construed as limiting the scope and/or the applicability of the accompanied claims. Lists and groups of examples provided in the description are not exhaustive unless otherwise explicitly stated.

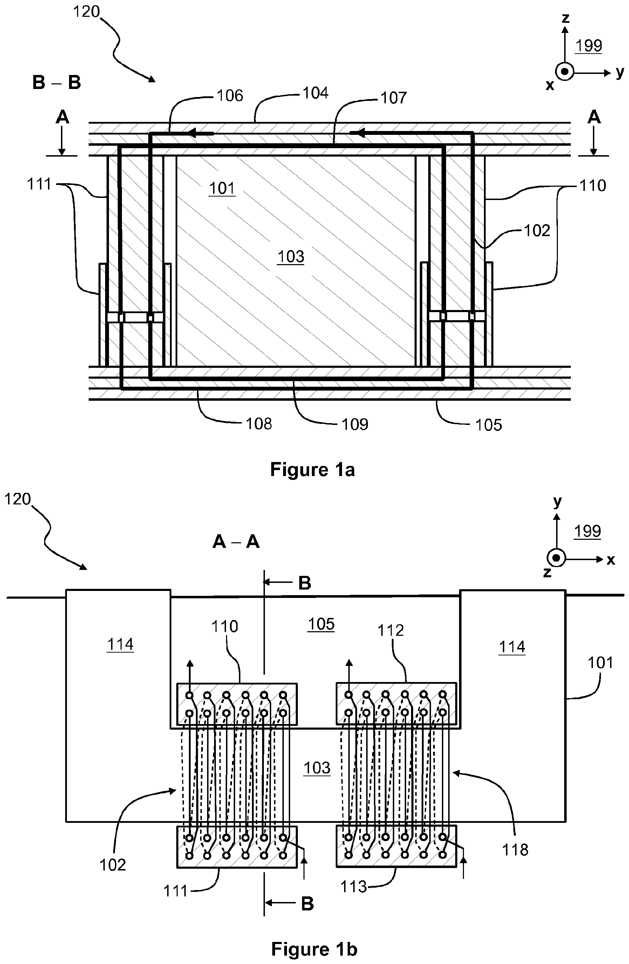

Figures 1a and 1b illustrate a position sensor 120 according to an exemplifying and non-limiting embodiment. Figure 1a shows a view of a section taken along a geometric line B-B shown in figure 1b so that the geometric section plane is parallel with the geometric yz-plane of a coordinate system 199. Figure 1b shows a view of a section taken along a geometric line A-A shown in figure 1a so that the geometric section plane is parallel with the geometric xy-plane of the coordinate system 199. The position sensor 120 comprises a ferromagnetic core 101 for conducting a magnetic flux to and from an object whose position, proximity, motion, displacement, and/or a distance with respect to the position sensor 102 is to be measured. The object is not shown in figures 1a and 1b. The ferromagnetic core 101 may comprise for example one or more pieces of ferrite. For another example, the ferromagnetic core 101 may comprise a stack of electrically insulated ferromagnetic steel sheets. The ferromagnetic steel sheets can be for example parallel with the geometric xy-plane of the coordinate system 199, and ferromagnetic steel sheets can be stacked on each other in the z-direction of the coordinate system 199. It is also possible that the ferromagnetic core 101 comprises suitable soft magnetic composite such as e.g. Somaloy^{®}. It is also possible that the ferromagnetic core 101 is made by additive manufacturing such as e.g. three-dimensional "3D" printing.

The position sensor 120 comprises coils 102 and 118 surrounding a part 103 of the ferromagnetic core 101. In this exemplifying position sensor 120, the ferromagnetic core 101 is a U-type ferromagnetic core where the part 103 surrounded by the coils 102 and 118 is a yoke that is connected to legs 114 of the ferromagnetic core 101. It is however also possible that a position sensor according to an exemplifying and non-limiting embodiment comprises a different ferromagnetic core, e.g. an E-type ferromagnetic core, and the position sensor may comprise one or more coils surrounding one or more legs and/or the yoke of the E-type ferromagnetic core. Therefore, position sensors according to exemplifying and non-limiting embodiments are not limited to any particular types of ferromagnetic cores nor to any particular coil arrangements.

The position sensor 120 comprises circuit boards 104 and 105 that are parallel with each other and arranged to mechanically support the ferromagnetic core 101 so that the ferromagnetic core 101 is between the circuit boards 104 and 105. The coil 102 comprises electric conductors of the circuit boards and electric connectors 110 and 111 that are arranged to electrically connect the electric conductors of the circuit board 104 to the electric conductors of the circuit board 105. In figure 1a, some of the electric conductors of the circuit board 104 are denoted with references 106 and 107 and some of the electric conductors of the circuit board 104 are denoted with references 108 and 109. Figure 1a illustrates how turns of the coil 102 are formed by the electric conductors of the circuit boards 104 and 105 and by the electric connectors 110 and 111. As the ferromagnetic core 101 and the electric connectors 110 and 111 are between the circuit boards 104 and 105 and the part 103 of the ferromagnetic core 101 is between the electric connectors 110 and 111, the coil 102 constituted by the electric conductors of the circuit boards and by the electric connectors 110 and 111 is around the part 103 of the ferromagnetic core 101. Correspondingly, the coil 118 comprises electric conductors of the circuit boards 104 and 105 and electric connectors 112 and 113 that are arranged to electrically connect the appropriate electric conductors of the circuit board 104 to the appropriate electric conductors of the circuit board 105. In figure 1b, the electric conductors of the circuit board 105 are schematically depicted with solid lines and the electric conductors of the circuit board 104 are schematically depicted with dashed lines. The circuit board 104 is not shown in figure 1b. There is no need for separate coil windings because the coils 102 and 118 are implemented when the circuit boards 104 and 105 are connected to each other with the aid of the electric connectors 110-113 so that the ferromagnetic core 101 gets between the circuit boards and between the electric connectors.

In the exemplifying position sensor illustrated in figures 1a and 1b, the circuit boards 104 and 105 are multilayer circuit boards comprising the above-mentioned electric conductors in two or more layers of the circuit boards. It is however also possible that a position sensor according to an exemplifying and non-limiting embodiment comprises single-layer circuit boards.

The exemplifying position sensor illustrated in figures 1a and 1b comprises two coils 102 and 118. One of the coils can be used as an excitation coil whereas the other one of the coils can be used as a measurement coil. It is however also possible that a position sensor according to an exemplifying and non-limiting embodiment comprises only one coil that can be used for both excitation and measuring.

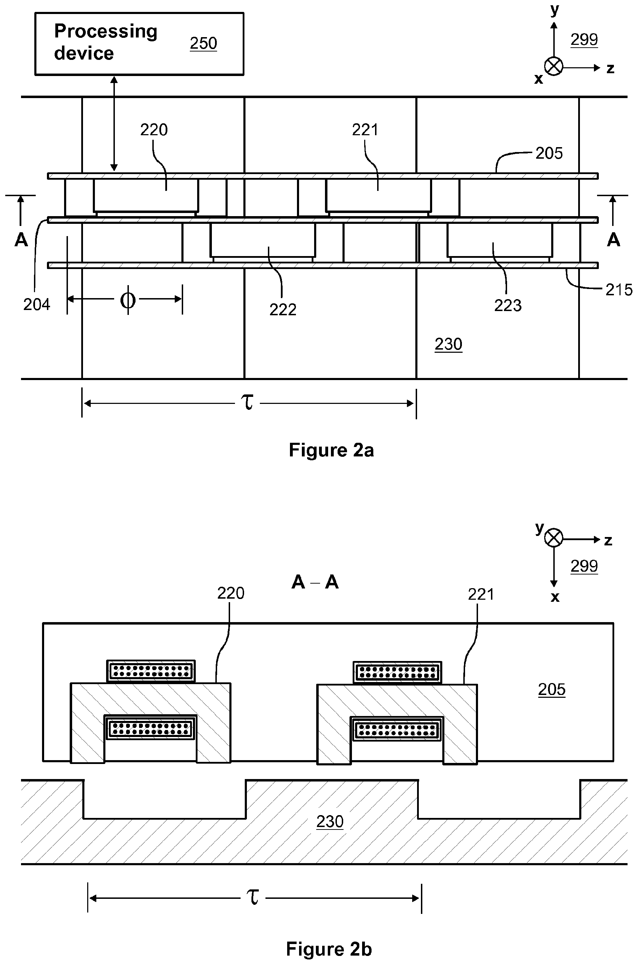

Figures 2a and 2b illustrate a position sensor system according to an exemplifying and non-limiting embodiment. Figure 2b shows a view of a section taken along a geometric line A-A shown in figure 2a so that the geometric section plane is parallel with the geometric xz-plane of the coordinate system 299. The position sensor system comprises position sensors 220, 221, 222, and 223 each of which can be for example such as the position sensor 120 illustrated in figures 1a and 1b. The position sensor system comprises a circuit board 204 belonging to the position sensors 220-223 and comprising electric conductors constituting parts of the coils of the position sensors 220-223. Thus, the same circuit 204 board can be used for implementing the coils of many position sensors. In this exemplifying case, there are ferromagnetic cores of the position sensors on both sides of the circuit board 204. Furthermore, the position sensor system comprises a circuit board 205 for implementing the coils of the position sensors 220 and 221, and a circuit board 215 for implementing the coils of the position sensors 222 and 223.

The exemplifying position sensor system illustrated in figures 2a and 2b is suitable for measuring a z-directional position of a toothed rail 230, and thereby a z-directional motion of the toothed rail 230. The position sensor system is connected to a processing device 250 for supplying excitation signals to the position sensors 220-223 and for forming data indicative of the position of the toothed rail 230 based on responses of the position sensors 220-223. The measuring accuracy is improved by using many position sensors instead of a single position sensor so that physical shifts between the position sensors in the z-direction of the coordinate system 299 differ from the tooth-pitch τ of the toothed rail 230 and from integer multiples of the tooth-pitch τ. In figure 1a, the z-directional physical shift between the position sensors 220 and 222 is denoted with φ. In the exemplifying position sensor system illustrated in figures 2a and 2b, the position sensors 220 and 221 are positioned with respect to the position sensors 222 and 223 so that the position sensors 220 and 221 are partially overlapping with the position sensors 222 and 223 when seen along the geometric y-axis of the coordinate system 299. This mechanical arrangement makes it possible that the position sensor system is shorter in the z-direction of the coordinate system 299 than in a case where corresponding position sensors are successively in the z-direction of the coordinate system 299. The position sensor system is also suitable for measuring an x-directional distance of the toothed rail 230 from the position sensors 220-223. Furthermore, the position sensor system is suitable for sensing tilting of the toothed rail 230 around a geometric axis parallel with the y-axis of the coordinate system 299 and for sensing tilting of the toothed rail 230 around a geometric axis parallel with the z-axis of the coordinate system 299.

It is to be noted that the mechanical arrangement shown in figures 2a and 2b is a non-limiting example only, and different mechanical arrangements are possible in position sensor systems according to exemplifying and non-limiting embodiments. For example, circuit boards of a position sensor system according to an exemplifying and non-limiting embodiment can be ring shaped and position sensors of the position sensor system can be arranged on inner circumferences of the ring-shaped circuit boards so that the position sensor system is suitable for measuring a position of a shaft protruding through apertures of the ring-shaped circuit boards. The position of the shaft in sideward directions of the shaft can be measured by comparing signals related to position sensors on opposite sides of the shaft, and the position of the shaft in the axial direction of the shaft can be measured if the shaft is provided with one or more circumferential grooves and/or other structures that make reluctance and/or eddy current properties of the shaft dependent on the axial position.

The processing device 250 can be implemented with one or more processor circuits, each of which can be a programmable processor circuit provided with appropriate software, a dedicated hardware processor such as for example an application specific integrated circuit "ASIC", or a configurable hardware processor such as for example a field programmable gate array "FPGA". Furthermore, the processing device 250 may comprise one or more memory circuits such as e.g. a random-access memory "RAM" circuits.

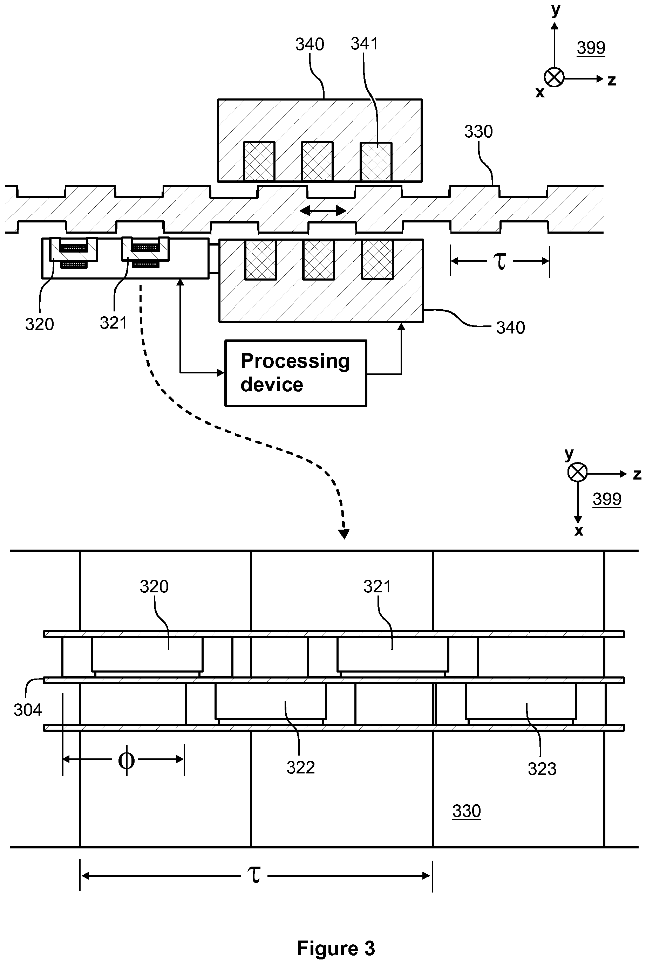

Figure 3 shows a section view of a linear electric machine according to an exemplifying and non-limiting embodiment. The geometric section plane is parallel with the geometric yz-plane of a coordinate system 399. The linear electric machine can be for example a magnetically levitated linear electric machine. The linear electric machine comprises a first element 340 having windings. In figure 3, a part of the windings is denoted with a reference 341. The linear electric machine comprises a second element 330 so that the first and second elements 340 and 330 are linearly movable with respect to each other in the ±z-directions of the coordinate system 399. In this exemplifying case, the second element 330 comprises a toothed ferromagnetic rail for generating reluctance forces in response to supplying electric currents to the windings of the first element 340. The first element 340 can be for example a mover and the second element 330 can be for example a stationary stator. It is however also possible that the first element 340 is a stationary stator and the second element 330 is a mover. In this exemplifying case, the linear electric machine is a switched reluctance linear electric machine. For another example, a linear electric machine according to an exemplifying and non-limiting embodiment can be a flux-switched permanent magnet "FSPM" linear electric machine.

The linear electric machine comprises a position sensor system for detecting the position of the second element 330 with respect to the position sensor system. Figure 3 shows a magnified view of the position sensor system when seen along the geometric y-axis of the coordinate system 399. The position sensor system can be for example such as illustrated in figures 2a and 2b. The position sensor system comprises position sensors 320, 321, 322, and 323 according to an exemplifying and non-limiting embodiment. In this exemplifying case, the position sensors 320-323 are attached to the first element 340. As shown in figure 3, the position and/or motion measurement can be based on the same toothed ferromagnetic rail that is used for force generation. In this exemplifying case, the position sensors 320-323 are positioned with respect to each other so that physical shifts between the position sensors in the longitudinal direction of the linear electric machine, i.e. in the z-direction of the coordinate system 399, differ from a tooth-pitch τ of the toothed ferromagnetic rail and from multiple integers of the tooth-pitch τ. In figure 3, the z-directional physical shift between the position sensors 320 and 322 is denoted with φ. The position sensors 320 and 321 are positioned with respect to the position sensors 322 and 323 so that the position sensors 320 and 321 are partially overlapping with the position sensors 322 and 323 when seen along the geometric x-axis of the coordinate system 399. This mechanical arrangement makes it possible that the position sensor system can be shorter in the longitudinal direction of the linear electric machine, i.e. in the z-direction of the coordinate system 399. In this exemplifying linear electric machine, the position sensor system comprises a circuit board 304 belonging to all the position sensors 320-323 and comprising electric conductors constituting parts of the coils of all the position sensors 320-323.

It is to be noted that the linear electric machine illustrated in figure 3 is a non-limiting example only, and position sensors according to exemplifying and non-limiting embodiments can be used in conjunction with different linear electric machines, in conjunction with rotating electric machines, in magnetically levitated systems, and in many other systems, too. For example, a linear electric machine may have a mover whose active parts are between two toothed ferromagnetic rails that are parts of a stator of the linear electric machine. In the exemplifying linear electric machine illustrated in figure 3, the toothed ferromagnetic rail is between two sides of the first element 340 that can be e.g. the mover of the linear electric machine.

In a linear electric machine according to an exemplifying and non-limiting embodiment, the ferromagnetic core of at least one position sensor is a ferromagnetic core around which at least a part of the windings of the linear electric machine is wound. At least one coil of the position sensor is arranged surround a part of the ferromagnetic core that conducts a force generating magnetic flux. Thus, the same ferromagnetic core can be used for both force generation and position and/or movement sensing.

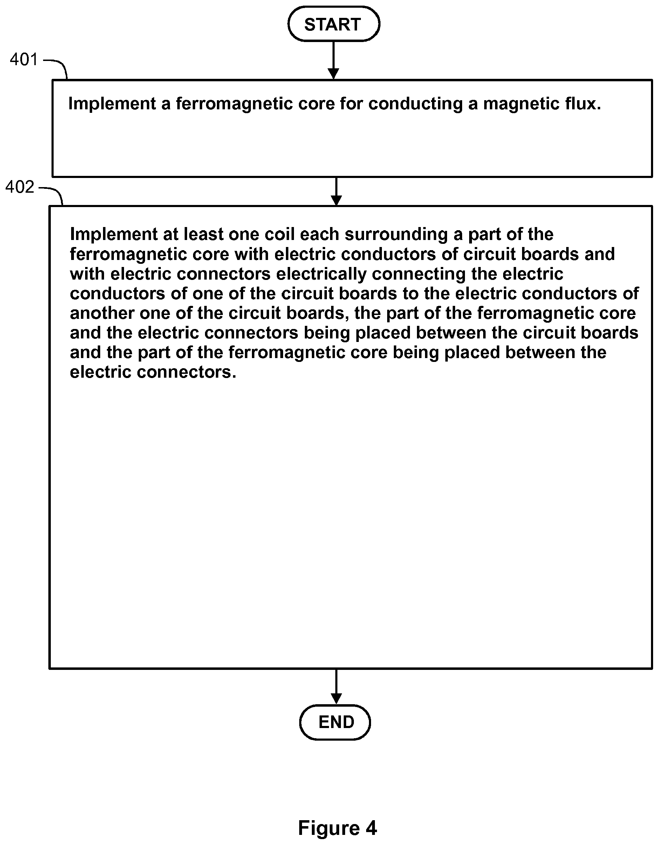

Figure 4 shows a flowchart of a method according to an exemplifying and non-limiting embodiment for manufacturing a position sensor. The method comprises the following actions:
- action 401: implementing a ferromagnetic core for conducting a magnetic flux, and
- action 402: implementing at least one coil each surrounding a part of the ferromagnetic core.

The above-mentioned coil is implemented with electric conductors of circuit boards and with electric connectors electrically connecting the electric conductors of one of the circuit boards to the electric conductors of another one of the circuit boards. The above-mentioned part of the ferromagnetic core and the electric connectors are placed between the circuit boards and the part of the ferromagnetic core is placed between the electric connectors. Thus, the coil constituted by the electric conductors of the circuit boards and by the electric connectors gets around the part of the ferromagnetic core.

In a method according to an exemplifying and non-limiting embodiment, the circuit boards are at least two-layer circuit boards comprising the electric conductors in two or more layers of the circuit boards.

A method according to an exemplifying and non-limiting embodiment comprises implementing two or more coils each of which comprises electric conductors of the circuit boards and electric connectors electrically connecting the electric conductors of one of the circuit boards to the electric conductors of another one of the circuit boards.

In a method according to an exemplifying and non-limiting embodiment, the ferromagnetic core comprises a yoke and legs connected to the yoke. In a method according to an exemplifying and non-limiting embodiment, the yoke is the part of the ferromagnetic core surrounded by the coil.

In a method according to an exemplifying and non-limiting embodiment, the ferromagnetic core is made of one or more pieces of ferrite.

In a method according to an exemplifying and non-limiting embodiment, the implementing the ferromagnetic core comprises constructing a stack of electrically insulated ferromagnetic steel sheets.

The specific examples provided in the description given above should not be construed as limiting the scope and/or the applicability of the appended claims. List and groups of examples provided in the description given above are not exhaustive unless otherwise explicitly stated.

## Claims

1. A position sensor (120) comprising:
- a ferromagnetic core (101) for conducting a magnetic flux,
- at least one coil (102) each surrounding a part (103) of the ferromagnetic core, and
- circuit boards (104, 105) mechanically supporting the ferromagnetic core,
**characterized in that** the coil comprises electric conductors (106-109) of the circuit boards and electric connectors (110-113) electrically connecting the electric conductors of one of the circuit boards to the electric conductors of another one of the circuit boards, wherein the part of the ferromagnetic core and the electric connectors are between the circuit boards and the part of the ferromagnetic core is between the electric connectors.

2. A position sensor according to claim 1, wherein the circuit boards (104, 105) are at least two-layer circuit boards comprising the electric conductors in two or more layers of the circuit boards.

3. A position sensor according to claim 1 or 2, wherein the coil (102) is one of two or more coils (102, 118) each being implemented with electric conductors of the circuit boards and with electric connectors electrically connecting the electric conductors of the one of the circuit boards to the electric conductors of the other one of the circuit boards.

4. A position sensor according to any one of claims 1-3, wherein the ferromagnetic core comprises a yoke and legs (114) connected to the yoke.

5. A position sensor according to claim 4, wherein the yoke is the part (103) of the ferromagnetic core surrounded by the coil.

6. A position sensor according to any one of claims 1-5, wherein the ferromagnetic core comprises one or more pieces of ferrite.

7. A position sensor according to any one of claims 1-5, wherein the ferromagnetic core comprises a stack of electrically insulated ferromagnetic steel sheets.

8. A position sensor system comprising two or more position sensors (220-223) according to any one of claims 1-7, wherein the position sensor system comprises a circuit board (204) belonging to at least two of the position sensors and comprising electric conductors constituting parts of the coils of the at least two of the position sensors.

9. A position sensor system according to claim 8, wherein the circuit board belonging to the at least two of the position sensors is between the ferromagnetic cores of at least two of the position sensors (220, 222).

10. A linear electric machine comprising:
- a first element (340) having windings (341),
- a second element (330) linearly movable with respect to the first element and having a toothed ferromagnetic rail for generating reluctance forces in response to supplying electric currents to the windings, and
- at least one position sensor (320-323) according to any one of claims 1-7 for detecting a position of the toothed ferromagnetic rail with respect to the position sensor.

11. A linear electric machine according to claim 10, wherein the linear electric machine comprises at least two position sensors (320, 322) according to any one of claims 1-7 so that a physical shift (φ) between the position sensors in a longitudinal direction (z) of the linear electric machine differs from a tooth-pitch (τ) of the toothed ferromagnetic rail.

12. A linear electric machine according to claim 11, wherein two of the position sensors (320, 322) are placed so that the ferromagnetic cores of these position sensors overlap partly with each other when seen along a direction (x) perpendicular to the longitudinal direction of the linear electric machine.

13. A linear electric machine according to claim 12, wherein the linear electric machine comprises a circuit board (304) belonging to two or more of the position sensors and comprising electric conductors constituting parts of the coils of the two or more of the position sensors.

14. A linear electric machine according to claim 10, wherein the ferromagnetic core of the at least one position sensor is a ferromagnetic core around which at least a part of the windings is wound, the at least one coil of the position sensor surrounding a part of the ferromagnetic core for conducting a force generating magnetic flux.

15. A method for manufacturing a position sensor, the method comprising:
- implementing (401) a ferromagnetic core for conducting a magnetic flux, and
- implementing (402) at least one coil each surrounding a part of the ferromagnetic core, and
**characterized in that** the coil is implemented with electric conductors of circuit boards and with electric connectors electrically connecting the electric conductors of one of the circuit boards to the electric conductors of another one of the circuit boards, wherein the part of the ferromagnetic core and the electric connectors are placed between the circuit boards and the part of the ferromagnetic core is placed between the electric connectors.

## Patentansprüche

1. Positionssensor (120), aufweisend:
- einen ferromagnetischen Kern (101) zum Leiten eines magnetischen Flusses,
- mindestens eine Spule (102), von der jeweils ein Teil (103) des ferromagnetischen Kerns umgeben wird, und
- Leiterplatten (104, 105), die den ferromagnetischen Kern mechanisch tragen,
**dadurch gekennzeichnet, dass** die Spule elektrische Leiter (106-109) der Leiterplatten und elektrische Anschlüsse (110-113), die die elektrischen Leiter einer der Leiterplatten elektrisch mit den elektrischen Leitern einer anderen der Leiterplatten verbinden, aufweist, wobei der Teil des ferromagnetischen Kerns und die elektrischen Anschlüsse sich zwischen den Leiterplatten befinden und der Teil des ferromagnetischen Kerns sich zwischen den elektrischen Anschlüssen befindet.

2. Positionssensor nach Anspruch 1, wobei die Leiterplatten (104, 105) mindestens zweischichtige Leiterplatten sind, bei denen die elektrischen Leiter in zwei oder mehr Schichten der Leiterplatten enthalten sind.

3. Positionssensor nach Anspruch 1 oder 2, wobei die Spule (102) eine von zwei oder mehr Spulen (102, 118) ist, die jeweils mit elektrischen Leitern der Leiterplatten und mit elektrischen Anschlüssen implementiert sind, die die elektrischen Leiter der einen der Leiterplatten mit den elektrischen Leitern der anderen der Leiterplatten elektrisch verbinden.

4. Positionssensor nach einem der Ansprüche 1-3, wobei der ferromagnetische Kern ein Joch und mit dem Joch verbundene Schenkel (114) aufweist.

5. Positionssensor nach Anspruch 4, wobei das Joch der von der Spule umgebene Teil (103) des ferromagnetischen Kerns ist.

6. Positionssensor nach einem der Ansprüche 1-5, wobei der ferromagnetische Kern eines oder mehrere Ferritstücke aufweist.

7. Positionssensor nach einem der Ansprüche 1-5, wobei der ferromagnetische Kern einen Stapel elektrisch isolierter ferromagnetischer Stahlbleche aufweist.

8. Positionssensorsystem, aufweisend zwei oder mehr Positionssensoren (220-223) nach einem der Ansprüche 1-7, wobei das Positionssensorsystem eine Leiterplatte (204) aufweist, die zu mindestens zwei der Positionssensoren gehört und elektrische Leiter aufweist, die Teile der Spulen der mindestens zwei der Positionssensoren bilden.

9. Positionssensorsystem nach Anspruch 8, wobei die zu den mindestens zwei der Positionssensoren gehörende Leiterplatte sich zwischen den ferromagnetischen Kernen von mindestens zwei der Positionssensoren (220, 222) befindet.

10. Lineare elektrische Maschine, aufweisend:
- ein erstes Element (340) mit Wicklungen (341),
- ein zweites Element (330), das in Bezug auf das erste Element linear beweglich ist und eine gezahnte ferromagnetische Schiene zum Erzeugen von Reluktanzkräften als Reaktion auf die Zufuhr von elektrischen Strömen auf die Wicklungen aufweist, und
- mindestens einen Positionssensor (320-323) nach einem der Ansprüche 1-7 zum Detektieren einer Position der ferromagnetischen Zahnschiene in Bezug auf den Positionssensor.

11. Lineare elektrische Maschine nach Anspruch 10, wobei die lineare elektrische Maschine mindestens zwei Positionssensoren (320, 322) nach einem der Ansprüche 1-7 aufweist, so dass eine physische Verschiebung (φ) zwischen den Positionssensoren in einer Längsrichtung (z) der linearen elektrischen Maschine sich von einer Zahnteilung (τ) der gezahnten ferromagnetischen Schiene unterscheidet.

12. Lineare elektrische Maschine nach Anspruch 11, wobei zwei der Positionssensoren (320, 322) so platziert sind, dass die ferromagnetischen Kerne dieser Positionssensoren sich teilweise einander überlappen bei Betrachtung entlang einer Richtung senkrecht zur Längsrichtung der linearen elektrischen Maschine.

13. Lineare elektrische Maschine nach Anspruch 12, wobei die lineare elektrische Maschine eine Leiterplatte (304) aufweist, die zu zwei oder mehr der Positionssensoren gehört, und elektrische Leiter aufweist, die Teile der Spulen der zwei oder mehr der Positionssensoren bilden.

14. Lineare elektrische Maschine nach Anspruch 10, wobei der ferromagnetische Kern des mindestens einen Positionssensors ein ferromagnetischer Kern ist, um den mindestens ein Teil der Wicklungen gewickelt ist, wobei die mindestens eine Spule des Positionssensors einen Teil des ferromagnetischen Kerns umgibt, um einen krafterzeugenden magnetischen Fluss zu leiten.

15. Verfahren zur Herstellung eines Positionssensors, wobei das Verfahren aufweist:
- Implementieren (401) eines ferromagnetischen Kerns zum Leiten eines magnetischen Flusses, und
- Implementieren (402) mindestens einer Spule, von der jeweils ein Teil des ferromagnetischen Kerns umgeben wird, und
**dadurch gekennzeichnet, dass** die Spule mit elektrischen Leitern von Leiterplatten und mit elektrischen Anschlüssen implementiert ist, die die elektrischen Leiter einer der Leiterplatten elektrisch mit den elektrischen Leitern einer anderen der Leiterplatten verbinden, wobei der Teil des ferromagnetischen Kerns und die elektrische Anschlüsse zwischen den Leiterplatten platziert sind und der Teil des ferromagnetischen Kerns zwischen den elektrischen Anschlüssen platziert ist.

## Revendications

1. Capteur de position (120) comprenant :
- un noyau ferromagnétique (101) pour conduire un flux magnétique,
- au moins une bobine (102) entourant chacune une partie (103) du noyau ferromagnétique, et
- des cartes de circuit (104, 105) supportant mécaniquement le noyau ferromagnétique,
**caractérisé en ce que** la bobine comprend des conducteurs électriques (106-109) des cartes de circuits et des connecteurs électriques (110-113) connectant électriquement les conducteurs électriques de l'une des cartes de circuit aux conducteurs électriques d'une autre des cartes de circuit, dans lequel la partie du noyau ferromagnétique et les connecteurs électriques sont entre les cartes de circuit et la partie du noyau ferromagnétique est entre les connecteurs électriques.

2. Capteur de position selon la revendication 1, dans lequel les cartes de circuit (104, 105) sont au moins des cartes de circuit à deux couches comprenant les conducteurs électriques en deux couches ou plus des cartes de circuits.

3. Capteur de position selon la revendication 1 ou 2, dans lequel dans lequel la bobine (102) est une de deux bobines ou plus (102, 118) étant chacune implémentée avec des conducteurs électriques des cartes de circuits et avec des connecteurs électriques connectant électriquement les conducteurs électriques de l'une des cartes de circuit aux conducteurs électriques de l'autre des cartes de circuit.

4. Capteur de position selon l'une quelconque des revendications 1-3, dans lequel le noyau ferromagnétique comprend un étrier et des branches (114) reliées à l'étrier.

5. Capteur de position selon la revendication 4, dans lequel l'étrier est la partie (103) du noyau ferromagnétique entourée par la bobine.

6. Capteur de position selon l'une quelconque des revendications 1-5, dans lequel le noyau ferromagnétique comprend une ou plusieurs pièce(s) de ferrite.

7. Capteur de position selon l'une quelconque des revendications 1-5, dans lequel le noyau ferromagnétique comprend une pile de feuilles d'acier ferromagnétique isolées électriquement.

8. Système de capteurs de position comprenant deux capteurs de position ou plus (220-223) selon l'une quelconque des revendications 1-7, dans lequel le système de capteurs de position comprend une carte de circuit (204) appartenant à au moins deux des capteurs de position et comprenant des conducteurs électriques constituant des parties des bobines des au moins deux des capteurs de position.

9. Système de capteurs de position selon la revendication 8, dans lequel la carte de circuit appartenant aux au moins deux des capteurs de position est entre les noyaux ferromagnétiques d'au moins deux des capteurs de position (220, 222).

10. Machine électrique linéaire comprenant :
- un premier élément (340) ayant des enroulements (341),
- un second élément (330) mobile de manière linéaire par rapport au premier élément et ayant un rail ferromagnétique denté pour générer des forces de réluctance en réponse à la fourniture de courants électriques aux enroulements, et
- au moins un capteur de position (320-323) selon l'une quelconque des revendications 1-7 pour détecter une position du rail ferromagnétique denté par rapport au capteur de position.

11. Machine électrique linéaire selon la revendication 10, dans laquelle la machine électrique linéaire comprend au moins deux capteurs de position (320, 322) selon l'une quelconque des revendications 1-7 de façon à ce qu'un décalage physique (ϕ) entre les capteurs de position dans une direction longitudinale (z) de la machine électrique linéaire diffère d'un pas de dent (τ) du rail ferromagnétique denté.

12. Machine électrique linéaire selon la revendication 11, dans laquelle deux des capteurs de position (320, 322) sont placés de façon à ce que les noyaux ferromagnétiques de ces capteurs de position se chevauchent partiellement l'un l'autre lorsque vus le long d'une direction (x) perpendiculaire à la direction longitudinale de la machine électrique linéaire.

13. Machine électrique linéaire selon la revendication 2, dans laquelle la machine électrique linéaire comprend une carte de circuit (304) appartenant à deux des capteurs de position ou plus et comprenant des conducteurs électriques constituant des parties des bobines des deux capteurs de position ou plus.

14. Machine électrique linéaire selon la revendication 10, dans laquelle le noyau ferromagnétique de l'au moins un capteur de position est un noyau ferromagnétique autour duquel au moins une partie des enroulements est enroulée, l'au moins une bobine du capteur de position entourant une partie du noyau ferromagnétique pour conduire un flux magnétique générateur de force.

15. Procédé de fabrication d'un capteur de position, le procédé comprenant :
- de mettre en œuvre (401) un noyau ferromagnétique pour conduire un flux magnétique, et
- de mettre en œuvre (402) au moins une bobine entourant chacune une partie du noyau ferromagnétique, et
**caractérisé en ce que** la bobine est mise en œuvre avec des conducteurs électriques de cartes de circuit et avec des connecteurs électriques connectant électriquement les conducteurs électriques de l'une des cartes de circuits aux conducteurs électriques de l'autre des cartes de circuits, dans lequel la partie du noyau ferromagnétique et les connecteurs électriques sont placés entre les cartes de circuits et la partie du noyau ferromagnétique est placée entre les connecteurs électriques.
